# EUROPÄISCHE PATENTSCHRIFT

(11) **EP 1 599 704 B1**
(45) Veröffentlichungstag und Bekanntmachung des Hinweises auf die Patenterteilung: **09.05.2007**
(21) Anmeldenummer: 04717045.1
(22) Anmeldetag: 04.03.2004
(51) Int. Cl.: G01D 11/00, B60S 1/08

(54) **SENSOREINRICHTUNG**
SENSOR DEVICE
DISPOSITIF DETECTEUR

(30) Priorität: 06.03.2003 DE 10309758
(43) Veröffentlichungstag der Anmeldung: 30.11.2005
(73) Patentinhaber: Leopold Kostal GmbH & Co. KG, 58507 Lüdenscheid (DE)
(72) Erfinder: HAGEN, Frank, 58511 Lüdenscheid (DE); WEBER, Thomas, 58513 Lüdenscheid (DE)
(86) Internationale Anmeldenummer: PCT/EP2004/002193
(87) Internationale Veröffentlichungsnummer: WO 2004/079300

(56) Entgegenhaltungen:
- EP-A- 1 191 352
- WO-A-00/50847
- DE-A- 3 724 927
- DE-A- 4 311 614
- US-A1- 2003 002 562

## Beschreibung

Die Erfindung betrifft eine Sensoreinrichtung, umfassend ein erstes Montagemodul und ein zum Betreiben der Sensoreinrichtung mit dem ersten Montagemodul verbundenes zweites Montagemodul, wobei die Sensoreinrichtung bei ihrer ersten Inbetriebnahme einen Initialisierungsprozess zu durchlaufen hat.

Sensoreinrichtungen finden im Automotive-Bereich vielfältigen Einsatz. Eingesetzt werden solche Sensoreinrichtungen, wenn diese optoelektronisch arbeitend ausgelegt sind, beispielsweise als Regensensor, Umgebungslichtsensor, Sonnenstandsensor oder dergleichen. Diese Sensoreinrichtungen umfassen zumindest zwei Montagemodule, wobei ein Montagemodul in aller Regel bereits am Kraftfahrzeug angeordnet ist, bevor das zweite Montagemodul daran befestigt wird. Bei dem ersten Montagemodul handelt es sich bei der Ausbildung einer solchen Sensoreinrichtung als Regensensor um einen Adapter oder Koppelkörper, mit dem der eigentliche Regensensor an der Innenseite der Windschutzscheibe befestigt wird. Der Adapter selbst ist an der Windschutzscheibe in aller Regel durch eine Klebung gehalten. Zum Ausbilden der Sensoreinrichtung - hier: Regensensor - ist an dem an der kraftfahrzeugseitig eingebauten Windschutzscheibe befestigten Adapter das zweite Montagemodul mit dem eigentlichen Sensor anzubringen. Ferner muss das zweite Montagemodul an einen Anschlusskabelsatz angeschlossen werden, über den die Sensoreinrichtung mit einer Spannungsquelle und gleichfalls mit einer Auswerte- und/oder Steuereinheit verbindbar ist. Zu diesem Zweck verfügt das zweite Montagemodul über ein Steckverbindungsteil, das mit einem fliegenden Gegensteckverbindungsteil, angeordnet an dem freien Ende des Anschlusskabelsatzes, zusammenzuführen ist.

Eine solche, beispielsweise als Regensensor ausgelegte Sensoreinrichtung durchläuft bei ihrer ersten Bestromung und somit ggf. bereits bei dem Zusammenführen der beiden Steckverbindungsteile einen Initialisierungsprozess. Mit einem solchen Initialisierungsprozess erfolgt eine Einstellung des Arbeitspunktes der Sensoreinrichtung, etwa hinsichtlich des Sendestroms der zum Betreiben des Regensensors eingesetzten LEDs, der Verstärkereinstellung oder dergleichen. Berücksichtigt werden bei einem solchen Initialisierungsprozess Toleranzen hinsichtlich der Ausbildung und Anordnung der einzelnen Elemente der Sensoreinrichtung und - wie im Falle eines Regensensors - auch der Transmissionsgrad der Windschutzscheibe. Damit der Initialisierungsvorgang bestimmungsgemäß erst dann abläuft, wenn das zweite Montagemodul an dem ersten Montagemodul befestigt ist und somit die Sensoreinrichtung ihre bestimmungsgemäße Anordnung aufweist, darf eine Bestromung der Sensoreinrichtung und somit ein Anschluss derselben an die Spannungsquelle erst dann erfolgen, wenn die beiden Montagemodule miteinander verbunden sind. Daher ist sicherzustellen, dass tatsächlich ein Verbinden der beiden Steckverbindungsteile erst erfolgt, wenn die Sensoreinrichtung durch Verbinden der beiden Montagemodule bestimmungsgemäß realisiert worden ist. Es kommt jedoch immer wieder vor, dass bei der Ausrüstung eines Kraftfahrzeuges mit derartigen Sensoreinrichtungen, beispielsweise mit einem Regensensor zunächst das zweite Montagemodul mit dem Anschlussstecker verbunden wird, bevor tatsächlich das zweite Montagemodul an dem ersten Montagemodul angebracht wird. Folglich läuft bei einer solchen Handhabung der Initialisierungsprozess unter falschen Umgebungsbedingungen ab. Daher ist eine solche Sensoreinrichtung in einem solchen Falle falsch initialisiert mit der Folge, dass ein bestimmungsgemäßer Betrieb nicht gegeben ist. Dies kann zwar korrigiert werden, indem die Sensoreinrichtung neu initialisiert wird, jedoch kann zumeist erst bei einem späteren Betrieb des Kraftfahrzeuges festgestellt werden, ob eine Montage einer solchen Sensoreinrichtung in der richtigen Reihenfolge vorgenommen und somit der Initialisierungsprozess bestimmungsgemäß durchlaufen worden ist.

EP 1 191 352 A2 offenbart eine Schnittstelle für eine Lichtschrankenanordnung, d.h. also für eine optoelektronische Sensoreinrichtung. Diese Schnittstelle besteht aus einer ersten Schnittstellenkomponente, die integraler Bestandteil der Lichtschrankenanordnung sein kann, und einem damit koppelbaren externen Schnittstellenelement. Als externes Schnittstellenelement kann hierbei auch eine besondere Ausführungsform für einen sog. "Teach-in" Betrieb vorgesehen sein, bei dem eine Konfiguration der Lichtschrankeneinrichtung stattfindet. Für den Normalbetrieb der Einrichtung muss diese jedoch wieder durch ein externes Schnittstellenelement gemäß einer anderen Ausführungsform ersetzt werden.

Ausgehend von diesem diskutierten Stand der Technik liegt der Erfindung daher die Aufgabe zugrunde, eine eingangs genannte gattungsgemäße Sensoreinrichtung dergestalt weiterzubilden, dass bei dieser gewährleistet ist, dass der Initialisierungsprozess erst dann durchlaufen wird, wenn die beiden Montagemodule bestimmungsgemäß miteinander verbunden sind.

Diese Aufgabe wird erfindungsgemäß dadurch gelöst, dass die Sensoreinrichtung ferner eine Initialisierungssicherung umfasst, durch die bei nicht verbundenen Montagemodulen das Durchlaufen des Initialisierungsprozesses verhindert ist und die durch eine Relativbewegung der beiden Montagemodule bei ihrer Montage miteinander zur Ausbildung der Sensoreinrichtung in ihre Freigabestellung geschaltet wird.

Diese Sensoreinrichtung verfügt über eine Initialisierungssicherung, durch die das Durchlaufen des Initialisierungsprozesses bzw. -vorganges solange verhindert ist, bis beide Montagemodule bestimmungsgemäß miteinander verbunden sind. Die Initialisierungssicherung wird durch die Relativbewegung der beiden Montagemodule gegeneinander bei ihrer Montage miteinander zur Ausbildung der Sensoreinrichtung in ihre Freigabestellung geschaltet. Somit ist bei einer solchen Sensoreinrichtung sichergestellt, dass der Initialisierungsprozess erst dann abläuft, wenn die Sensoreinrichtung durch Verbinden der beiden Montagemodule miteinander bestimmungsgemäß ausgebildet ist.

Die Initialisierungssicherung kann mechanisch und/oder elektrisch /elektronisch arbeitend ausgelegt sein. Bei einer mechanisch arbeitenden Initialisierungssicherung kann vorgesehen sein, dass das Einführen des an dem freien Ende eines Anschlusskabelsatzes befindlichen Steckverbindungsteils zum Anschließen des eigentlichen Sensors an eine Spannungsquelle bzw. auch zum Anschließen desselben an eine Auswerteeinheit erst möglich ist, wenn beide Montagemodule miteinander verbunden sind. Dies kann beispielsweise dadurch realisiert sein, dass die Einstecköffnung zum Einstecken des an dem Anschlusskabelsatz befindlichen Steckverbindungsteils verschlossen ist, wenn das zweite Montagemodul nicht mit dem ersten Montagemodul bestimmungsgemäß verbunden ist. Eine solche Blockierung der Einstecköffnung kann beispielsweise durch einen Verschluss realisiert sein, der beim Verbinden des zweiten Montagemoduls mit dem ersten Montagemodul in seine Offen-Stellung (Freigabestellung) bewegt und somit geschaltet wird. Dabei ist es möglich, die Bewegungsbahn eines solchen Verschlusselementes fluchtend mit der Montagebewegung der beiden Montagemodule gegeneinander vorzusehen oder auch dergestalt zu konzipieren, dass das Verschlusselement durch eine rotatorische Bewegung der beiden Montagemodule gegeneinander in seine Offen-Stellung gebracht wird. In einer weiteren Ausgestaltung einer solchen mechanisch wirkenden Initialisierungssicherung ist vorgesehen, dass eine Einsteckbewegung des Anschlusssteckverbindungsteils, wenn das zweite Montagemodul noch nicht mit dem ersten Montagemodul verbunden ist, dadurch blockiert ist, dass sich das dem zweiten Montagemodul zugeordnete Steckverbindungsteil in einer nicht fluchtenden Lage mit einer in einem dem zweiten Montagemodul zugeordneten Gehäuse befindlichen Einstecköffnung befindet. Folglich ist zwar grundsätzlich ein Einführen des Anschlusssteckverbindungsteils in die Einstecköffnung des Gehäuses möglich, ein bestimmungsgemäßes Zusammenstecken der beiden Steckverbindungsteile ist jedoch verhindert. Das dem zweiten Montagemodul zugeordnete Steckverbindungsteil ist beispielsweise auf einer Platine angeordnet, die ihrerseits in Montagerichtung der beiden Montagemodule bewegbar in dem Gehäuse des zweiten Montagemoduls aufgenommen ist. Durch Verbinden der beiden Montagemodule wird bei diesem Ausführungsbeispiel die Platine zusammen mit dem Steckverbindungsteil in eine Position bewegt, in der das Steckverbindungsteil mit der Einstecköffnung des Gehäuses fluchtet, so dass dann das Anschlusssteckverbindungsteil bestimmungsgemäß mit dem Steckverbindungsteil der Sensoreinrichtung verbunden werden kann.

Bei einer Auslegung der Initialisierungseinrichtung als elektrische /elektronische Schalteinrichtung kann beispielsweise vorgesehen sein, diese als elektrischen Schalter, insbesondere berührungslos arbeitend, zu konzipieren. Bei einer solchen Ausgestaltung kann der Initialisierungsprozess erst dann durchlaufen werden, wenn sich die elektrische Schalteinrichtung in einer vorbestimmten Schaltposition befindet, durch die gewährleistet ist, dass die beiden Montagemodule bestimmungsgemäß miteinander verbunden sind. Als berührungslose Schalteinrichtung kann beispielsweise ein Hall-Sensor eingesetzt werden, der dem zweiten Montagemodul zugeordnet ist. Bei einer solchen Ausgestaltung kann dem ersten Montagemodul ein Magnet zugeordnet sein, der durch Verbinden der beiden Montagemodule miteinander in eine bestimmte, von dem Hall-Sensor detektierbare Position gebracht wird. Das in dieser Stellung ausgangsseitig am Hall-Sensor anliegende Signal stellt sodann ein Triggersignal zum Auslösen des Initialisierungsprozesses dar. Durch Zusammenführen der beiden Montageelemente ist somit auch bei dieser Ausgestaltung die Initialisierungssicherung dann in ihre Freigabe-Stellung geschaltet. Anstelle der vorgeschriebenen elektrischen/elektronischen Ausgestaltung der Initialisierungssicherung können auch andere zum Einsatz kommen, beispielsweise optisch arbeitende oder auch mechanische Schalter.

Nachfolgend ist die Erfindung anhand eines Ausführungsbeispiels unter Bezugnahme auf die beigefügten Figuren beschrieben. Es zeigen:
- **Fig. 1**: einen schematisierten Querschnitt durch ein Montagemodul einer Sensoreinrichtung,
- **Fig. 2**: eine perspektivische Darstellung des Gehäuses des Montagemoduls der Figur 1 und
- **Fig. 3**: einen schematisierten Querschnitt durch das mit einem weiteren Montagemodul verbundene Montagemodul der Figur 1.

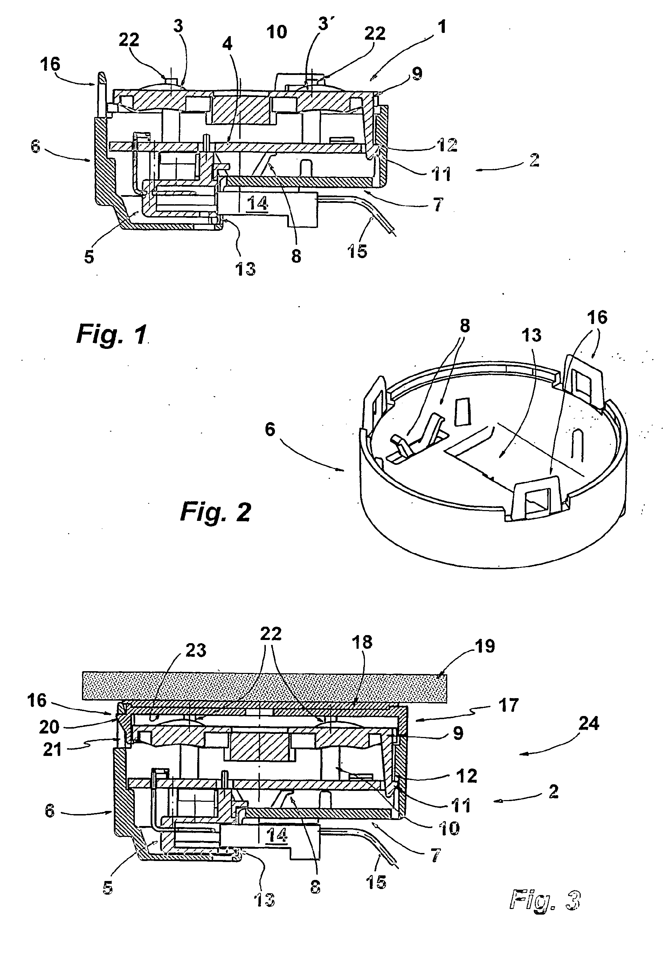

Ein Sensor 1 ist Teil eines Montagemoduls 2 zum Ausbilden einer Sensoreinrichtung, die bei dem dargestellten Ausführungsbeispiel ein Regensensor für ein Kraftfahrzeug ist. Bei dem Sensor 1 handelt es sich um einen optischen Sensor mit einzelnen Linsen 3, 3' die oberhalb einer Platine 4 angeordnet sind. Auf der Platine 4 sind photoelektrische Sende- und Empfangselemente, beispielsweise LEDs und Photodioden und weitere, zum Betreiben des Sensors 1 benötigte elektrische/elektronische Baugruppen angeordnet. Auf der von den Linsen 3, 3' wegweisenden Seite der Platine 4 ist an dieser ferner ein Steckverbindungsteil 5 befestigt. Eingefasst sind die beschriebenen Elemente des Sensors 1 in einem gehäuseartigen Deckel 6. Von dem rückwärtigen Deckelteil 7 nach innen abragend sind an diesem Spreizfederbeine 8 angeformt, deren federnde Eigenschaften aus der Materialelastizität des zum Herstellen des Deckels 6 eingesetzten Kunststoffes resultieren. Die in Figur 1 gezeigte Unterseite der Platine 4 stützt sich an den Spreizfederbeinen 8 ab. Gehalten wird die Platine 4 in dem Deckel 6 durch einen die Linsen 3, 3' tragenden Linsenhalter 9, der sich auf der Oberseite der Platine 4 durch Stützelemente 10 abstützt. Der Linsenhalter 9 verfügt über Rastnasen 11, die zum Halten des Linsenhalters 9 und somit auch zum Halten der Platine 4 in dem Deckel jeweils einen Hinterschnitt 12 des Deckels 6 hintergreifen. Dabei ist vorgesehen, dass der Hinterschnitt 12 entgegen der durch die Spreizfederbeine 8 bereitgestellten Federkraft wirkt. Somit befindet sich der Sensor 1 in dem Deckel 6 durch die aus den Spreizfederbeinen 8 resultierenden Federkraft in einer stabilen Lage.

Der Linsenhalter 9 ist zusammen mit der Platine 4 zum rückwärtigen Deckelteil 7 hin gegen die Kraft der Spreizfederbeine 8 bewegbar in dem Deckel 6 angeordnet. In der in Figur 1 gezeigten Stellung befindet sich der eigentliche Sensor 1 in einer ersten Stellung innerhalb des Deckels 6.

Der Deckel 6 verfügt über eine Einstecköffnung 13, durch die ein Anschlusssteckverbindungsteil 14, das an dem freien Ende eines Anschlusskabelsatzes 15 angeordnet ist, zum Kontaktieren des Sensors 1 eingeschoben werden kann. Eine tatsächliche Kontaktierung zwischen dem Anschlusssteckverbindungsteil 14 und dem von der Platine 4 getragenen Steckverbindungsteil 5 ist in der in Figur 1 gezeigten Stellung jedoch nicht möglich, da das Steckverbindungsteil 5 bezüglich seiner Zugangsöffnung nicht mit der Einstecköffnung 13 des Deckels 6 fluchtet. Das Anschlusssteckverbindungsteil 14 stößt mit seiner vorderen Stirnseite an die Stirnseite des Steckverbindungsteils 5. Eine Kontaktierung und somit auch ein Anschließen des Sensors 1 an eine Spannungsquelle ist somit in dieser in Figur 1 gezeigten Anordnung zwischen Sensor 1 und Deckel 6 nicht möglich.

Figur 2 zeigt nochmals den Deckel 6 in einer perspektivischen Ansicht, wobei insbesondere die Einstecköffnung 13 und die Spreizfederbeine 8 erkennbar sind. Der Deckel 6 verfügt über mehrere Rastöffnungsfortsätze 16, die dem Zweck dienen, das Montagemodul 2 mit einem weiteren Montagemodul zu verbinden.

Zur Ausbildung der eigentlichen Sensoreinrichtung - dem Regensensor in dem dargestellten Ausführungsbeispiel - wird das Montagemodul 2, wie in Figur 3 gezeigt, mit einem weiteren Montagemodul 17 verbunden. Das Montagemodul 17 ist ein Adapter bzw. Koppelkörper, der durch eine Kleberschicht 18 an der Innenseite der Windschutzscheibe 19 eines im übrigen nicht näher dargestellten Kraftfahrzeuges befestigt ist. Die Verbindung des Montagemoduls 17 an der Innenseite der Windschutzscheibe 18 erfolgt durch Klebung.

Das Montagemodul 17 verfügt über Rastnasen 20, die zum Verbinden der beiden Montagemodule 2, 17 miteinander in die Öffnungen 21 der Rastöffnungsfortsätze 16 eingreifen. Auf der Oberseite des die Linsen 3, 3' tragenden Linsenhalters 9 sind mehrere Stellzapfen 22, deren oberer Abschluss jeweils in einer gemeinsamen Ebene angeordnet ist, abragend angeordnet. Die Stellzapfen 22 dienen dem Zweck, dass beim Verbinden des Montagemoduls 2 mit dem Montagemodul 17 - und somit in allgemeiner Form beim Verbinden eines ersten Montagemoduls (hier: Montagemodul 17) mit einem zweiten Montagemodul (hier: Montagemodul 2) - diese zur Anlage an der Unterseite 23 des Montagekörpers 17 gelangen, so dass im Zuge der Relativbewegung der beiden Montagemodule 2, 17 zueinander der Linsenhalter 9 infolge der Stützelemente 10 ebenfalls die Platine 4 mit ihrem Steckverbindungsteil 5 gegen die Kraft der Spreizfederbeine 8 zum rückwärtigen Deckelteil 7 des Deckels 6 hin bewegt werden. Der durch diese Montagebewegung in der beschriebenen Weise bewegte Sensor 1 kann in Figur 3 anhand des Abstandes der Rastnasen 11 des Linsenhalters 9 von dem Hinterschnitt 12 des Deckels 6 erkannt werden. Durch diese zum rückwärtigen Deckelteil 7 hin gerichtete Bewegung gelangt die Zugangsöffnung des Steckverbindungsteils 5 in eine fluchtende Anordnung mit der Einstecköffnung 13 des Deckels 6, so dass in der in Figur 3 gezeigten Stellung des Sensors 1 gegenüber dem Deckel 6 das Anschlusssteckverbindungsteil 14 ohne weiteres mit dem Steckverbindungsteil 5 zusammengeführt werden kann. Erst nach Zusammenführen der beiden Steckverbindungsteile 14, 5 kann eine erste Bestromung des Sensors 1, mit der ein Initialisierungsprozess bzw. -vorgang ausgelöst und durchlaufen wird, erfolgen. Bei diesem Initialisierungsprozess erfolgt eine Adaption des Sensors 1 an vorhandene Messbedingungen, beispielsweise an den Transmissionsgrad der Windschutzscheibe 19.

Der nunmehr funktionstüchtige Regensensor als Sensoreinrichtung ist in Figur 3 mit dem Bezugszeichen 24 bezeichnet.

Aus der Beschreibung der Sensoreinrichtung wird deutlich, dass der Initialisierungsprozess erst dann ablaufen kann, wenn die beiden Montagemodule bestimmungsgemäß miteinander verbunden sind und somit sichergestellt ist, dass der Regensensor tatsächlich ausgebildet und an der Innenseite der Windschutzscheibe angeordnet ist. Somit sind fehlerhafte Initialisierungsauslösungen verhindert.

Anstelle der in den Figuren gezeigten Ausgestaltung besteht ebenfalls die Möglichkeit, eine Sensoreinrichtung durch weitere Sicherungsmaßnahmen dahingehend zu sichern, dass auch ein manuelles Verschieben des Sensors 1 innerhalb des Deckels 6 vermieden ist. Dies lässt sich beispielsweise dadurch realisieren, dass lediglich das dem Sensor zugeordnete Steckverbindungsteil in Montagerichtung beweglich ist und über dem an der Windschutzscheibe befestigten Montagemodul zugeordnete Stellelemente bewegt werden können, die die Platine durchgreifen. Gleichfalls sind Ausgestaltungen realisierbar, bei denen ein Verschlusselement innerhalb des Deckels angeordnet ist, durch das bei nicht montiertem Montagemodul ein Anschluss mit dem Anschlusssteckverbindungsteil blockiert ist. Dieses Verschlusselement ist in geeigneter Weise kinematisch an einer Montagebewegung der beiden Montagemodule gekoppelt, so dass dieses beim Verbinden der beiden Montagemodule miteinander in seine Offen-Stellung bewegt wird. Als Sensoreinrichtungen können sämtliche optoelektronischen Sensoreinrichtungen dienen, die einen vorbeschriebenen Initialisierungsprozess durchlaufen müssen.

### Bezugszeichenliste

- 1: Sensor
- 2: Montagemodul
- 3, 3': Linse
- 4: Platine
- 5: Steckverbindungsteil
- 6: Deckel
- 7: Deckelteil
- 8: Spreizfederbeine
- 9: Linsenhalter
- 10: Stützelement
- 11: Rastnase
- 12: Hinterschnitt
- 13: Einstecköffnung
- 14: Anschlusssteckverbindungsteil
- 15: Anschlusskabelsatz
- 16: Rastöffnungsfortsatz
- 17: Montagemodul
- 18: Kleberschicht
- 19: Windschutzscheibe
- 20: Rastnase
- 21: Rastöffnung
- 22: Stellzapfen
- 23: Unterseite
- 24: Regensensor

## Patentansprüche

1. Optoelektronische Sensoreinrichtung, umfassend ein erstes Montagemodul (17) und ein zum Betreiben der Sensoreinrichtung mit dem ersten Montagemodul (17) zu verbindendes zweites Montagemodul (2), wobei die Sensoreinrichtung (24) bei ihrer ersten Inbetriebnahme einen Initialisierungsprozess zu durchlaufen hat, **dadurch gekennzeichnet, dass** die Sensoreinrichtung (24) ferner eine Initialisierungssicherung umfasst, durch die bei nicht verbundenen Montagemodulen (2, 17) das Durchlaufen des Initialisierungsprozesses verhindert ist, wobei die Initialisierungssicherung durch eine Relativbewegung der beiden Montagemodule (2, 17) bei ihrer Montage miteinander zur Ausbildung der Sensoreinrichtung (24) in ihre Freigabestellung geschaltet wird.

2. Sensoreinrichtung nach Anspruch 1, **dadurch gekennzeichnet, dass** die Sensoreinrichtung (24) eine dem zweiten Montagemodul (2) zugeordnete elektrische Anschlußeinrichtung (5) aufweist, über die die Sensoreinrichtung (24) an eine Spannungsquelle anschließbar ist, und dass die Initialisierungssicherung mechanisch wirkend ausgelegt ist, wobei durch diese in ihrer Geschlossen-Stellung ein Anschluß der Sensoreinrichtung (24) an die Spannungsquelle blockiert ist.

3. Sensoreinrichtung nach Anspruch 1 oder 2, **dadurch gekennzeichnet, dass** die Initialisierungssicherung durch ein dem zweiten Montagemodul (2) zugeordnetes Steckverbindungsteil (5) und eine einem dem Steckverbindungsteil (5) zumindest im Bereich seines Zugangs einschließenden Gehäuse (6) zugeordnete Einstecköffnung (13) zum Einführen eines Gegensteckverbindungsteils (14) zum elektrischen Anschließen der Sensoreinrichtung (24) gebildet ist, wobei das Steckverbindungsteil (5) gegenüber der Einstecköffnung (13) des Gehäuses (6) bewegbar in dem Gehäuse (6) gehalten ist und durch ein Federelement (8) in seiner ein Einsetzen des Gegensteckverbindungsteils (14) blockierenden Stellung gehalten ist, wenn das erste Montagemodul (17) nicht mit dem zweiten Montagemodul (2) verbunden ist.

4. Sensoreinrichtung nach Anspruch 3, **dadurch gekennzeichnet, dass** das Steckverbindungsteil (5) auf einer Platine (4) des zweiten Montagemoduls (2) angeordnet ist.

5. Sensoreinrichtung nach Anspruch 3 oder 4, **dadurch gekennzeichnet, dass** das erste Montagemodul über Stellelemente verfügt, mit denen bei einem Verbinden der beiden Montagemodule miteinander das Steckverbindungsteil gegenüber der Einstecköffnung des Gehäuses zum Freigeben der Einstecköffnung bewegt wird.

6. Sensoreinrichtung nach Anspruch 5, **dadurch gekennzeichnet, dass** die Stellelemente Stellzapfen sind.

7. Sensoreinrichtung nach Anspruch 1, **dadurch gekennzeichnet, dass** die Initialisierungssicherung durch einen elektrischen Schalter gebildet ist.

8. Sensoreinrichtung nach Anspruch 7, **dadurch gekennzeichnet, dass** der elektrische Schalter berührungslos arbeitend ausgelegt ist.

9. Sensoreinrichtung nach einem der Ansprüche 1 bis 8, **dadurch gekennzeichnet, dass** die Sensoreinrichtung ein Regensensor ist.

10. Sensoreinrichtung nach Anspruch 9, **dadurch gekennzeichnet, dass** die Initialisierungssicherung ein in den Strahlengang der Optik eingebrachter Verschluss ist.

## Claims

1. Optoelectronic sensor device comprising a first assembly module (17) and a second assembly module (2) to be joined to the first assembly module (17) for the purpose of operating the sensor device, with the sensor device (24) having to pass through an initialisation process during its initial commissioning, **characterised by** the fact that the sensor device (24) additionally encompasses an initialisation impeding feature by means of which the performance of the initialisation process is prevented, wherein the initialisation impeding feature is switched to its release position by means of a relative movement of the two assembly modules (2, 17) in the course of their being joined together to constitute the sensor device (24).

2. Sensor device in accordance with Claim 1, **characterised by** the fact that the sensor device (24) is provided with an electrical connection facility (5) assigned to the second assembly module, by means of which the sensor device (24) can be connected to a voltage source, and that the initialisation impeding feature is designed to act mechanically, with a connection of the sensor device (24) to the voltage source being obstructed as a result of the same being in its closed position.

3. Sensor device in accordance with Claim 1 or Claim 2, **characterised by** the fact that the initialisation impeding feature is formed by a plug-in connector constituent (5) assigned to the second assembly module (2) as well as a plug opening (13) which is assigned to a housing enclosing the plug-in connector constituent (5) at least in the vicinity of its opening in order to insert a mating plug-in connector constituent (14) for the purpose of electrically connecting the sensor device (24), wherein the plug-in connector constituent (5) is held in the housing in a moveable manner in relation to the plug opening (13) of the housing (6) and is retained in its position obstructing an insertion of the mating plug-in connector constituent (14) by a flexible element (8) as long as the first assembly module (17) is not joined to the second assembly module (2).

4. Sensor device in accordance with Claim 3, **characterised by** the fact that the plug-in connector constituent (5) is arranged on a printed circuit board (4) of the second assembly module (2).

5. Sensor device in accordance with Claim 3 or Claim 4, **characterised by** the fact that the first assembly module is provided with positioning elements with which the plug-in connector constituent is moved in relation to the plug opening of the housing when the two assembly modules are connected to each other to release the plug opening.

6. Sensor device in accordance with Claim 5, **characterised by** the fact that the positioning elements are positioning pins.

7. Sensor device in accordance with Claim 1, **characterised by** the fact that the initialisation impeding feature is fashioned by an electric switch.

8. Sensor device in accordance with Claim 7, **characterised by** the fact that the electric switch is designed to function in a non-contact manner.

9. Sensor device in accordance with any of Claims 1 to 8, **characterised by** the fact that the sensor device is a rain sensor.

10. Sensor device in accordance with Claim 9, **characterised by** the fact that the initialisation impeding feature is a closure introduced in the beam path of the optical system.

## Revendications

1. Système de détection optoélectronique comprenant un premier module de montage (17) et un deuxième module de montage (2) qui est relié au premier module de montage (17) pour l'exploitation du système de détection, ledit système de détection (24) étant soumis à un processus d'initialisation lors de la première mise en service, **caractérisé en ce que** le système de détection (24) comprend de plus un système de sécurité d'initialisation qui empêche l'exécution du processus d'initialisation lorsque les deux modules de montage (2, 17) ne sont pas assemblés l'un avec l'autre, ledit système de sécurité d'initialisation étant connecté dans sa position de libération par un mouvement relatif des deux modules de montage (2, 17) lors de leur assemblage entre eux pour le réalisation du système de détection (24).

2. Système de détection selon la revendication 1, **caractérisé en ce que** le système de détection (24) présente une pièce de liaison électrique (5), associé au deuxième module de montage (2), par l'intermédiaire duquel le système de détection (24) peut être raccordé à une source de tension, et **en ce que** le système de sécurité d'initialisation est conçu pour agir mécaniquement, et empêche, dans sa position fermée, un raccordement du système de détection (24) à la source de tension.

3. Système de détection selon revendication 1 ou 2, **caractérisé en ce que** le système de sécurité d'initialisation est formé par une pièce de liaison enfichable (5) associée au deuxième module de montage (2) et par une ouverture d'insertion (13), associée à un boîtier (6) entourant la pièce de liaison enfichable (5) au moins dans la zone de son accès, pour l'introduction d'une pièce de liaison enfichable complémentaire (14) pour le raccordement électrique du système de détection (24), la pièce de liaison enfichable (5) étant maintenue dans le boîtier (6), mobile par rapport à l'ouverture d'insertion (13) dudit boîtier (6), et maintenue dans sa position empêchant l'insertion de la pièce de liaison enfichable complémentaire (14) par un élément élastique (8) lorsque le premier module de montage (17) n'est pas relié au deuxième module de montage (2).

4. Système de détection selon la revendication 3, **caractérisé en ce que** la pièce de liaison enfichable (5) est agencée sur une platine (4) du deuxième module de montage (2).

5. Système de détection selon revendication 3 ou 4, **caractérisé en ce que** le premier module de montage dispose d'éléments de positionnement au moyen desquels, lors d'un assemblage des deux modules de montage entre eux, la pièce de liaison enfichable est déplacée par rapport à l'ouverture d'insertion du boîtier pour la libération de ladite ouverture d'insertion.

6. Système de détection selon la revendication 5, **caractérisé en ce que** les éléments de positionnement sont des broches d'ajustage.

7. Système de détection selon la revendication 1, **caractérisé en ce que** le système de sécurité d'initialisation est formé par un commutateur électrique.

8. Système de détection selon la revendication 7, **caractérisé en ce que** le commutateur électrique est conçu de manière à fonctionner sans contact.

9. Système de détection selon l'une des revendications 1 à 8, **caractérisé en ce que** le système de détection est un détecteur de pluie.

10. Système de détection selon la revendication 9, **caractérisé en ce que** le système de sécurité d'initialisation est un obturateur agencé dans le trajet du rayonnement du système optique.
